# EUROPEAN PATENT SPECIFICATION

(11) **EP 0 853 558 B1**
(45) Date of publication and mention of the grant of the patent: **12.01.2000**
(21) Application number: 96932885.5
(22) Date of filing: 16.10.1996
(51) Int. Cl.: B60P 1/36, A01J 25/16

(54) **STORAGE SYSTEM FOR OBJECTS ARRANGED AT A DISTANCE FROM ONE ANOTHER**
SYSTEM ZUM LAGERN VON IN ABSTAND ZUEINANDER ANGEORDNETEN GEGENSTÄNDEN
DISPOSITIF DE STOCKAGE POUR OBJETS SITUES A DISTANCE LES UNS DES AUTRES

(30) Priority: 16.10.1995 NL 1001425
(43) Date of publication of application: 22.07.1998
(73) Proprietor: Kaasgilde Holland B.V., 1270 AA Huizen (NL)
(72) Inventor: BUNSCHOTEN, Elbert, NL-1272 AH Huizen (NL)
(74) Representative: de Bruijn, Leendert C.
(86) International application number: NL9600399
(87) International publication number: WO9714578

(56) References cited:
- DE-A- 2 343 250
- DE-A- 4 028 020
- GB-A- 975 618
- GB-A- 2 068 323
- US-A- 2 593 717
- US-A- 3 048 258

## Description

The present invention relates to a storage system according to the preamble of Claim 1.

The most common technique for loading cheeses into a lorry is to place a so-called cheese plank in a longitudinal guide in a lorry and to position the cheeses thereon. If a cheese plank has been filled, a subsequent cheese plank is arranged in front of the latter, or above or below it. This involves a large amount of manual work which, moreover, in view of the weight of the cheeses is relatively heavy. Since the space inside the lorry is limited, only one, or at most two, persons may assist with the loading operation, as a result of which it takes a considerable time to load or unload the lorry. After use, the cheese planks are stored in the lorry and take up a large amount of space. As a result, the remaining space, in the empty state, is limited, so that it will be difficult to transport other freight during the return journey.

In order to facilitate loading and unloading, it has been proposed in the prior art to arrange a number of circulating conveyor belts above one another in a lorry. The cheeses can then be loaded on these conveyor belts, which extend over the entire width of the lorry, and when these conveyor belts are moved in the direction of the driver's cab, the lorry can be gradually loaded.

Although a system of this kind provides a considerable improvement compared with the prior art, it has not become widely used. One significant reason is that the conveyor belts take up a relatively large amount of space in the vertical direction. As a result, a considerably smaller number of cheeses can be transported, for which reason the total transport costs per cheese will increase. Another drawback is that the vehicle in question is only suitable for transporting cheeses. Due to the permanent presence of the conveyor belts, it is at any rate impossible to load a return freight.

Objects such as cheeses need to be loaded so that they are positioned at a slight distance from one another. If the cheeses come into contact with one another, damage occurs.

British Patent 975,618, which is used as the starting point for Claim 1, discloses a loading space comprising two conveyors which are situated at a vertical distance from one another, one conveyor being situated near the bottom and the other approximately halfway up the loading space. These conveyors are designed for receiving loads arranged on pallets. These loads are transported further together with the pallets. A storage system of this kind is unsuitable for transporting cheeses, because the latter are generally supplied in the longitudinal direction on a conveyor belt and are not positioned on pallets or supports.

The conveyor chain system is driven by a common motor and engagement of the related pallet is effected by a carrier which can move between a retracted and an engaging position. Loads have to be transported individually into the loading space. This means that if a large number of objects has to be loaded, unloaded respectively, the chain conveyor has to move to and fro a considerable number of times increasing the time for loading/unloading respectively.

The object of the present invention is to provide a storage system which does not have the above-described disadvantages.

This object is achieved in the case of a storage system as described above by means of the characterizing features of Claim 1.

According to the invention, a transfer station is present for receiving these objects, which transfer station is displaceable in the vertical direction, in order to be placed in front of each of these conveyors and is provided with displacement means in order to transfer these objects onto the conveyors or to remove them therefrom. In this manner, rows of cheeses are loaded successively using a relatively simple device. A device of this kind can also be combined with a feed station, which is placed in front of the transfer station, in the loading direction, and is designed to receive these objects, and transfer means being present in order to displace these objects from the said feed station to the said transfer station (or vice versa). Optionally, this feed station may be provided with a buffer, in order to compensate for irregular feeding during this transfer of cheeses.

The invention is based on the insight of no longer employing conveyor belts which take up a large amount of useful loading space, but rather of using conveyor elements which extend only in the region of the longitudinal side walls of the vehicle in question. The height occupied thereby relates only to a relatively narrow side wall part. The space between the conveyor elements can be used completely for accommodating the cheeses. The supports may be of relatively slender construction and occupy a negligible amount of space. The function of these supports is comparable to that of the cheese planks known in the prior art, except that these supports are, of course, provided with means for engaging with the conveyors.

If, with the structure according to the invention, the cheeses and the associated supports are removed from the lorry, a very large amount of useful loading space is formed, as a result of which it is very easy to transport a return freight. By using the storage device according to the invention, it is necessary only to provide a supply of cheeses and supports near the end of the conveyor elements, i.e., in the usual position, near the rear loading door of the lorry. In contrast to manual loading, it is no longer necessary to move the cheeses partly into the lorry by means of a conveyor belt at the start of loading.

According to an advantageous embodiment of the invention, the supports are of Z-shaped design and can be nested. The Z-shaped construction means that the cheeses can be arranged in the support in a slightly fixed manner. Moreover, a Z-shaped construction makes it possible to achieve a particularly high strength of the supports combined with a low use of material. Due to the fact that the supports can be nested, the latter take up a particularly small amount of space in the storage position and form a more or less stable unit.

Although the conveying elements may comprise all designs known in the prior art, such as belts, cables and the like, it is preferred to design them as chains.

The above-described storage device makes it possible to load a lorry in a number of ways. Thus, at is possible, with the aid of suitable interacting means which directly adjoin the conveyor means, to receive supports from the lorry row-by-row. Moreover, it is possible to unload (and/or load) all the rows simultaneously.

In particular, designs of this kind will be used in factories and warehouses where large numbers of cheeses are handled.

The supply and removal means described above may be arranged fixed in the lorry in question, but may also be arranged so as to be in some way displaceable with respect thereto. Moreover, it is possible to provide the lorry with a transporting facility for the supply and removal means, so that the lorry can be loaded/unloaded automatically at smaller locations.

The invention also relates to a method for loading and unloading objects into a loading space according to Claims 9 and 10.

The invention will be explained in more detail below with reference to an exemplary embodiment depicted in the drawing, in which:
Fig. 1 shows a side view, partially cut away, of a lorry provided with the storage device according to the invention;
Fig. 2 shows a top view of the storage device near the end of the lorry;
Fig. 3 shows a side view of a detail of the feed and transfer station near the end of the lorry;
Fig. 4 shows a detail of the conveyor elements and supports; and
Fig. 5 shows a detail of the guide system for the conveyor chains.

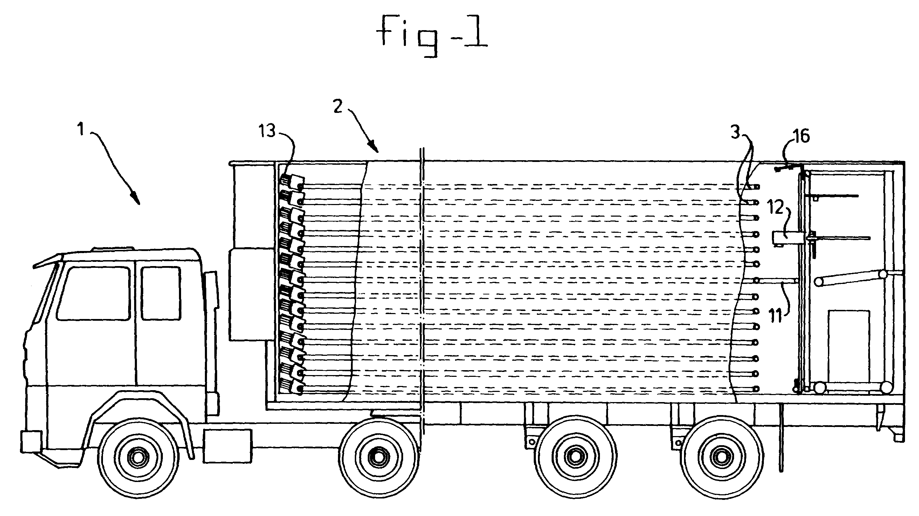

In Fig. 1, 1 indicates a lorry provided with a loading space 2.

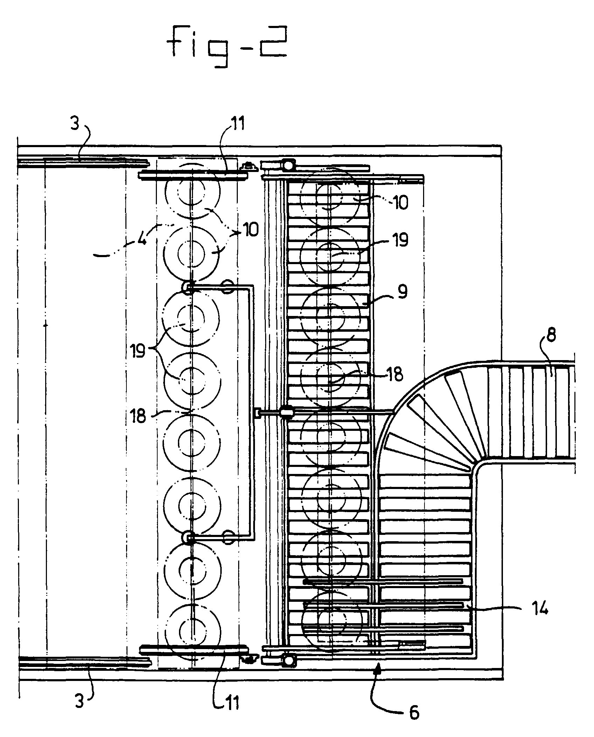

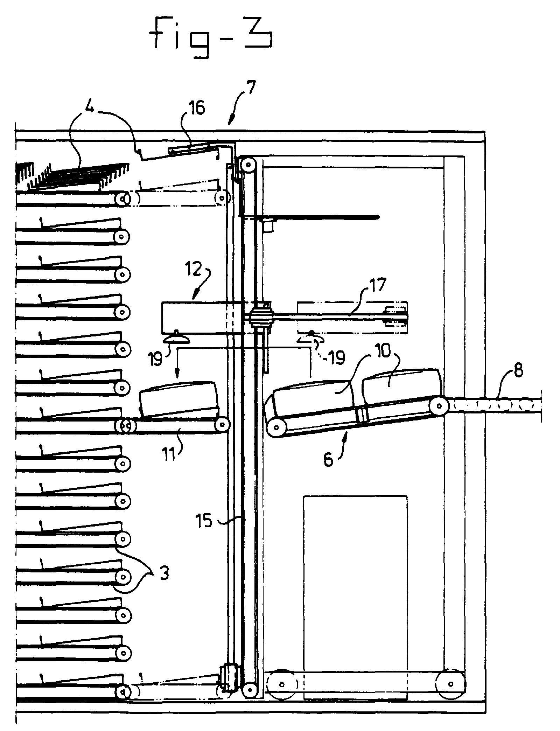

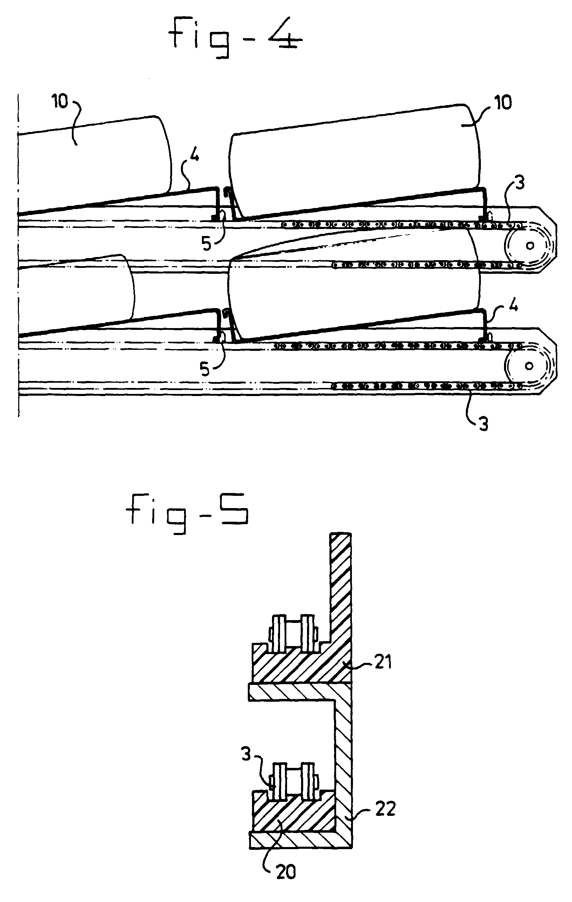

Near the side walls, this loading space is provided with a number of revolving conveyor chains 3 arranged one above the other. The latter are driven by diagrammatically depicted motors 13. These motors may be hydraulic motors, but are preferably electric motors, and more particularly they are driven by an external power supply, such as the mains voltage present at the loading and unloading location. As can be seen from Fig. 2, the width of this conveyor chain 3 is relatively small. The conveyor chains are provided at regular intervals with carriers 5. As can be seen from Fig. 4, these carriers 5 are designed to engage with supports 4 of Z-shaped design. These supports 4 may be produced, for example, from a stainless steel material. The special shape of supports 4 provides a relatively high strength while they are easy to stack, as can be seen from Fig. 3.

Fig. 2 shows that supports 4 of this kind extend over the entire width of the lorry and are supported on the conveyor chains 3. Cheeses 10 may be placed on the supports 4, as can be seen from Fig. 4.

Loading and unloading the supports is carried out by means of a feed station 6 and a transfer station 7. Feed station 6 comprises a feed roller conveyor 8 and a positioning roller conveyor 9. The roller conveyor 9 is driven in order to place the diagrammatically depicted cheeses 10 in the positions indicated therein. A transfer conveyor 14 is present between roller conveyors 8 and 9, this transfer conveyor comprising three revolving belt-shaped parts, which can be displaced in the vertical direction with respect to conveyors 8 and 9.

Transfer station 7 comprises a vertical mast 15, along which a conveyor structure, as well as a pick-up device 16 for supports 4, can be displaced in the vertical direction. A transfer means 12 is present, comprising an arm 17 with yoke 18 on which a number of suction cups 19 are fastened. This number of suction cups 19 corresponds to the number of cheeses to be displaced. Yoke 18 with suction cups 19 can be displaced, by means of a guide and arm 17, between the position shown in continuous lines on the left in Fig. 3 and the position shown in dot-dashed lines on the right in Fig. 3. The suction cups are connected to a vacuum suction device (not shown in more detail). The mutual spacing between the suction cups 19 can be varied. The conveyor structure comprises two short chains 11 and acts in a corresponding manner to the conveyor formed by the two chains 3. Moreover, motor means are present, in order to drive both the chains 11, the pick-up device 16 for the supports and the yoke 18. As shown, the transfer station 7 is of movable design.

Fig. 5 shows a detail of the support for the conveyor chain 3. The latter runs on a plastic web 20 or 21, respectively, fastened to a profile 22 which is connected, in a manner not shown in more detail, to the wall of the loading body of the lorry. In this way, the weight of the supports and of the cheeses situated thereon can be taken up without too much friction. The conveyor chains 11 can be guided in a corresponding manner.

The above-described device functions as follows during the loading operation:

Cheeses are fed via feed roller conveyor 8. If a cheese is situated above transfer conveyor 14 and is to be moved onto positioning roller conveyor 9, transfer conveyor 14 is first moved upwards in order to move the cheese out of engagement with roller conveyor 8. Transfer conveyor 14 is then moved to the left, in order to transfer the cheese onto positioning roller conveyor 9, and is then moved downwards again. Positioning roller conveyor 9 is then controlled such that the position which is shown in Fig. 2 is finally reached. In the process, the cheeses are pressed up against one another. This has no adverse effect on the quality of the cheeses for a short time, but is undesirable in the long term.

Starting from this position, and with yoke 18 of the transfer station in the position shown in dot-dashed lines on the right in Fig. 3, the yoke is moved downwards, so that the suction cups 19 suck up the cheeses. Here, the suction cups are situated in the position in which they are moved towards one another. In the meantime, the conveyor which is formed by the chains 11 is moved upwards for receiving a support 4 from pick-up device 16. The chains 11 are then moved downwards again into a fixed starting position. Arm 17 with yoke 18 and suction cups 19, with cheeses suspended therefrom, are moved into the left-hand position drawn in continuous lines in Figure 3. During this movement, the suctions cups are moved apart, such that a small spacing is formed between the cheeses. This spacing may vary from a few millimetres to a few centimetres. Then, yoke 17 with the suction cups 19 and the cheeses suspended therefrom is moved downwards and the cheeses are placed on the support 4. In this way, it is ensured that a small spacing remains between the cheeses during transportation in the lorry, so that they are not damaged by vibrations, jolting and the like during transportation. Moreover, placing and transferring them in this manner avoids damage which occurred in the prior art due to the rough handling of the cheeses, such as throwing them about. Then, the assembly comprising two chains 11 and the cheeses situated thereon are placed in front of the correct conveyor and are driven such that the support 4 moves one position further into the lorry.

The above-described method of transferring from the roller conveyor onto a support for the cheeses means that the latter are always placed on the support with a slight mutual spacing, independently of small variations in diameter of the cheeses. As a result, not only is the abovementioned damage avoided, but also the circulation of air during transportation is optimized in the lorry, so that an optimum product is produced.

It will be understood that the control of the various drive motors for the various chain/transfer devices etc. is interlinked, in order to avoid undesirable states and to carry out loading and unloading as efficiently as possible. Moreover, it is possible to load and unload only very specific parts of the lorry, in order in this way, for example, to be able to provide various buyers with various types of cheese from one factory.

As can be seen from Fig. 4, the structure with conveyor chains and supports may be of particularly compact design, since the cheeses do not come into contact with the conveyor chains, which are situated only at the sides of the lorry.

It will be understood that the above-described structure makes it possible to operate at large-scale locations without the aid of the stations 6 and 7, while loading can be carried out in a particularly ergonomic and efficient manner at small-scale locations with the aid of stations 6 and 7, which optionally may be brought along in the back of the lorry. It will also be understood that unloading takes place in the reverse order.

In addition to the fact that loading can be carried out more efficiently, the device according to the invention makes the loading time shorter, as a result of which, in particular in the case of cheeses which have not yet completely matured, the unfavourable conditions which often prevail during loading take less time, as a result of which the quality of the cheeses is better preserved. Preferably, the transfer station and the associated parts are designed such that it is possible to fill the loading space with returned packaging or the like if no cheeses or the like have to be transported. To this end, it is possible for the transfer device and the like to be moved into a position which is so high that the freight loading space in question can be positioned beneath it. It is likewise possible to move the transfer device towards the front, that is to say the side remote from the loading/unloading opening, so that the remaining part of the loading space is free for further freight.

Although the invention is described above with reference to loading and unloading cheeses, it should be understood that other objects can also be handled using the above-described storage device. The device will be designed for transferring and engaging as a function of the objects. Moreover, it is possible, during the transfer operation, to determine properties of the objects, such as dimensions and weight. Moreover, cleaning means may be present, in order to change the supports after use. Moreover, it is possible to place the supports in separate guides which support the latter while the carriers 5 provide the displacement.

## Claims

1. Storage system comprising a storage device for placing objects, such as cheeses (10), at a spacing from one another, comprising a number of motor (13) driven conveyors placed one above the other in a loading space (2), such as a lorry (1), provided with means for supporting these objects, said conveyors comprise reversing means arranged at the ends, above/below which a top part and bottom part, respectively, of the conveyor is delimited, each conveyor comprising conveyor elements (3) positioned at a distance opposite one another and provided with carrier means (5), as well as a large number of supports (4), which supports have a width such that they can be supported on conveyor elements positioned opposite one another, and said supports are provided with means for engaging with these carrier means and supply and removal means interacting with these conveyors are present, comprising a transfer station (7) for receiving these objects, said transfer station is displaceable in the vertical direction, in order to be placed in front of each of these conveyors and is provided with displacement means (11) in order to transfer these objects onto the conveyors or to remove them therefrom, characterised in that at least three conveyors are arranged above one another, each having a number of carrier means (15) at regular intervals thereon, said conveyor means being driveable such that the supports are to be received either row by row or simultaneously from the loading space (2).

2. Storage system according to Claim 1 means being present for placing these objects on these supports at the transfer station or removing them from these supports.

3. Storage system according to Claim 1 these supports (4) being of Z-shaped design and such that they can be nested.

4. Storage system according to one of the preceding claims feed station (6) being present placed in front of the transfer station and designed to receive these objects and transfer means (12) being present in order to displace these objects from the said feed station to the said transfer station (or vice versa).

5. Storage system according to Claim 4 this feed station comprising a buffer.

6. Storage system according to one of the preceding claims comprising means for positioning the supports onto the transfer station or removing them therefrom.

7. Storage system according to one of the preceding claims the supply and removal means for the storage device being displaceable.

8. Storage system according to one of the preceding claims the transfer station being provided with means for transferring more than one object simultaneously which means are designed such that the spacing of these means and thus of these objects can be changed during the transfer operation.

9. Method for loading and unloading objects (10) into and from a loading space (2) which loading space is provided with a number of conveyors placed one above the other each conveyor comprising conveyor elements (3) positioned at a distance apart for receiving a support (4) on and between said conveyor element on which supports these objects are arranged wherein these objects during loading are supplied to a transfer station (7) while during unloading these objects are supplied on these supports at the transfer station, characterised in that after being supplied to the transfer station the objects are placed on a support and moved into the loading space and after unloading to the transfer station the objects are taken off the supports and these objects are removed.

10. Method according to Claim 9 these supports being fed to and removed from a storage present in the lading space.

## Patentansprüche

1. Lagersystem mit einer Lagervorrichtung zum Plazieren von Objekten, wie beispielweise Käselaiben (10), mit Abstand voneinander, mit einer Anzahl von Förderanlagen, die über Motore (13) angetrieben werden und übereinander in einem Laderaum (2), wie beispielweise einem Lastkraftwagen (1), plaziert sind, der mit Mitteln ausgestattet ist, um diese Objekte zu tragen, wobei die Förderanlagen Umkehrmittel umfassen, die an den Enden angeordnet sind, über/unter denen ein oberer Teil bzw. ein unterer Teil der Förderanlage begrenzt ist, wobei jede Förderanlage Forderelemente (3), die mit Abstand einander gegenüber positioniert sind und mit Trägermitteln (5) versehen sind, sowie eine große Anzahl von Unterlagen (4) mit einer Breite, so daß sie auf einander gegenüber positionierten Förderelementen gestützt werden können, umfaßt, und wobei die Unterlagen mit Mitteln zur Ineingriffnahme mit diesen Tragermitteln ausgestattet sind und mit diesen Förderanlagen zusammenwirkende Zufuhr- und Entnahmemittel vorliegen, mit einer Umladestation (7) zur Aufnahme dieser Objekte, wobei die Umladestarion sich in vertikaler Richtung verversetzen kann, um vor jeder dieser Förderanlagen plaziert zu werden, und mit einem Versetzungsmittel (11) ausgestattet ist, um diese Objekte auf die Förderanlagen umzuladen oder sie von diesen zu entfernen, dadurch gekennzeichnet, daß mindestens drei Förderanlagen übereinander angeordnet sind, die daran jeweils eine Anzahl von Trägermitteln (15) in regelmäßigen Intervallen aufweisen, wobei sich die Fördermittel derart antreiben lassen, daß die Unterlagen entweder Reihe für Reihe oder gleichzeitig von dem Laderaum (2) aufgenommen werden sollen.

2. Lagersystem nach Anspruch 1, wobei Mittel vorliegen, um diese Objekte auf diesen Unterlagen an der Umladestation zu plazieren oder sie von diesen Unterlagen zu entfernen.

3. Lagersystem nach Anspruch 1, wobei diese Unterlagen (4) einen Z-förmigen Aufbau aufweisen und so ausgebildet sind, daß sie genestet werden können.

4. Lagersystem nach einem der vorhergehenden Ansprüche, wobei eine vor der Umladestation plazierte Beschickungsstation (6), die ausgelegt ist, diese Objekte aufzunehmen, und ein Umlademittel (12), um diese Objekte von der Beschickungsstation zu der Umladestation (oder umgekehrt) zu verschieben, vorliegen.

5. Lagersystem nach Anspruch 4, wobei diese Beschickungsstation einen Puffer umfaßt.

6. Lagersystem nach einem der vorhergehenden Ansprüche, mit Mitteln zum Positionieren der Unterlagen auf die Umladestation oder zum Entfernen dieser davon.

7. Lagersystem nach einem der vorhergehenden Ansprüche, wobei sich die Zufuhr- und Entnahmemittel für die Lagervorrichtung verschieben lassen.

8. Lagersystem nach einem der vorhergehenden Ansprüche, wobei die Umladestation mit Mitteln zum gleichzeitigen Umladen von mehr als einem Objekt ausgestattet ist, wobei die Mittel so ausgelegt sind, daß der Abstand dieser Mittel und somit dieser Objekte während des Umladevorgangs verändert werden kann.

9. Verfahren zum Laden und Entladen von Objekten (10) in und aus einem Laderaum (2), wobei der Laderaum mit einer Reihe von Förderanlagen ausgestattet ist, die übereinander plaziert sind, wobei jede Förderanlage Förderelernente (3) umfaßt, die eine Strecke voneinander beabstandet sind, um auf und zwischen dem Förderelement eine Unterlage (4) aufzunehmen, wobei auf diesen Unterlagen diese Objekts angeordnet sind, wobei diese Objekte beim Laden einer Umladestation (7) zugeführt werden, während beim Entladen diese Objekte auf diesen Unterlagen an der Umladestation zugeführt werden, dadurch gekennzeichnet, daß nach der Zufuhr zu der Umladestation die Objekte auf einer Unterlage plaziert werden und in den Laderaum bewegt werden und nach dem Entladen zu der Umladestation die Objekte von den Unterlagen entfernt werden und diese Objekte entnommen werden.

10. Verfahren nach Anspruch 9, wobei diese Unterlagen einem in dem Frachtraum vorliegenden Speicher zugeführt und diesem entnommen werden.

## Revendications

1. Système d'entreposage comprenant un dispositif d'entreposage pour placer des objets tels que des fromages (10) à l'écart l'un de l'autre, comprenant un certain nombre de courroies transporteuses entraînées par un moteur (13), placées l'une par-dessus l'autre dans un espace de chargement (2) tel qu'un camion (1) équipé de moyens pour supporter ces objets, lesdites courroies transporteuses comprenant des moyens renversant la marche, arrangés aux extrémités, au-dessus/en dessous desquels sont délimitées une partie supérieure et une partie inférieure respectivement de la courroie transporteuse, chaque courroie transporteuse comprenant des éléments de transport (3) disposés à distance à l'opposé l'un de l'autre et munis de moyens porteurs (5) et d'un grand nombre de supports (4), la largeur desdits supports étant telle que ces derniers peuvent être supportés sur des éléments de transport positionnés à l'opposé l'un de l'autre, et lesdits supports étant équipés de moyens pour entrer en contact avec ces moyens porteurs, des moyens d'alimentation et d'évacuation agissant de manière réciproque avec ces courroies transporteuses étant présents, comprenant un poste de transfert (7) pour recevoir ces objets, ledit poste de transfert étant à même de se déplacer en direction verticale pour venir se disposer devant chacune desdites courroies transporteuses et étant muni de moyens de déplacement (11) dans le but de transférer ces objets sur les courroies transporteuses ou de les en évacuer, caractérisé en ce qu'au moins trois courroies transporteuses sont arrangées l'une par-dessus l'autre; chacune possédant un certain nombre de moyens porteurs (15) à des intervalles réguliers sur les premières citées, lesdits moyens de transport étant à même d'être entraînés de telle sorte que les supports viennent se loger, soit rangée par rangée, soit simultanément dans l'espace de chargement (2).

2. Système d'entreposage selon la revendication 1, des moyens étant présents pour placer ces objets sur ces supports au poste de transfert ou pour les retirer de ces supports.

3. Système d'entreposage selon la revendication 1, ces supports (4) étant réalisés en forme de Z et de telle sorte qu'ils peuvent s'encastrer.

4. Système d'entreposage selon l'une quelconque des revendications précédentes, un poste d'alimentation (6) étant présent à l'avant du poste de transfert et étant conçu pour recevoir ces objets, et un moyen de transfert (12) étant présent dans le but de déplacer ces objets depuis ledit poste d'alimentation jusqu'audit poste de transfert (ou vice versa).

5. Système d'entreposage selon la revendication 4, ce poste d'alimentation comprenant un tampon.

6. Système d'entreposage selon l'une quelconque des revendications précédentes, comprenant des moyens pour positionner les supports sur le poste de transfert ou pour les en retirer.

7. Système d'entreposage selon l'une quelconque des revendications précédentes, les moyens d'alimentation et d'évacuation pour le dispositif d'entreposage étant à même de se déplacer.

8. Système d'entreposage selon l'une quelconque des revendications précédentes, le poste de transfert étant équipé de moyens pour transférer plus d'un objet de manière simultanée, lesdits moyens étant conçus de telle sorte que l'on peut modifier l'écartement de ces moyens, par conséquent de ces objets au cours de l'opération de transfert.

9. Procédé pour charger et décharger des objets (10) dans et hors d'un espace de chargement (2), ledit espace de chargement étant équipé d'un certain nombre de courroies transporteuses placées l'une par-dessus l'autre, chaque courroie transporteuse comprenant des éléments de transport (3) positionnés à l'écart l'un de l'autre pour recevoir un support (4) sur et entre lesdits éléments de transport, ces objets étant arrangés sur lesdits supports, dans lequel, ces objets, au cours du chargement, sont acheminés à un poste de transfert (7) tandis que, au cours du déchargement, ces objets sont acheminés sur ces supports au poste de transfert, caractérisé en ce que, après avoir acheminé les objets au poste de transfert, on les place sur un support et on les déplace dans l'espace de chargement et, après leur déchargement au poste de transfert, les objets sont retirés des supports et ces objets sont évacués.

10. Procédé selon la revendication 9, ces supports étant acheminés à et évacués d'un entreposage présent dans l'espace de chargement.
